# EUROPEAN PATENT APPLICATION

(11) **EP 1 370 027 A1**
(43) Date of publication of application: **10.12.2003**
(21) Application number: 02012351.9
(22) Date of filing: 05.06.2002
(51) Int. Cl.: H04L 12/26, H04L 29/06

(54) **Computer network leakage detection, location and identification**

(71) Applicant: T.I.P. Holdings GmbH, 20354 Hamburg (DE)
(72) Inventor: von Wallenberg, Philipp, 45127 Essen (DE)
(74) Representative: VOSSIUS & PARTNER

(57) **Abstract**

The present invention relates to the detecting, locating and identifying of leakages in computer networks. The method of detecting, locating and identifying leakages in a computer network comprises the steps of: transmitting from a sender unit within said computer network a request signal to at least one client computer of said computer network, said request signal containing as source address the IP address of a monitoring unit external to said computer network and preferably as payload the IP address of the requested client computer, said request signal initiating at the requested client an echo reply signal; monitoring at said external receiver unit incoming echo reply signals; and forwarding a monitoring result signal from the external receiver unit to a management unit within said computer network, said monitoring result signal comprising the IP address of the requested client computer representing location and identification information of a client computer being leaky, and preferably comprising the payload of the received echo reply signal, said payload representing location and identification information of a client computer being leaky.

## Description

The present invention relates to a method and system for detecting, locating and identifying of leakages in computer networks. In particular, the present invention relates to a sender unit and a transmitter unit for use in a method for detecting, locating and identifying of leakages in computer networks.

Large companies nowadays deploy a number of LAN and WAN networks transporting IP (Internet Protocol) packets as their core network protocol. Most companies have connections to the internet to offer internet services to their employees and B2B or B2C services to their customers or business partners. To protect the corporate network against attacks from the internet, the internet connection is typically secured by using sophisticated firewalling, content inspection and intrusion detection technologies. This results in limitations - either in bandwidth or in allowed services - of the internet services provided to the employees. To circumvent these limitations, employees connect their IT equipment directly to the internet while being connected to the corporate network in parallel. This is done either by directly dialling into the internet by modem connection or by using routers and DSL-connections thus enabling direct internet access for a whole network segment. Naturally this bypass is neither wanted nor allowed by the central corporate infrastructure division. In most cases, direct internet access is prohibited, but there are no technical mechanisms in place to detect and terminate these unwanted connections. In most cases, there are no software modules handy, that can be installed on all versions of operating systems used by the employees detecting an unwanted internet connection. And in most cases, there is no control of the installed telecommunication equipment, so there is no way to detect an unapproved internet connection, neither from the client side nor from the telecommunication side.

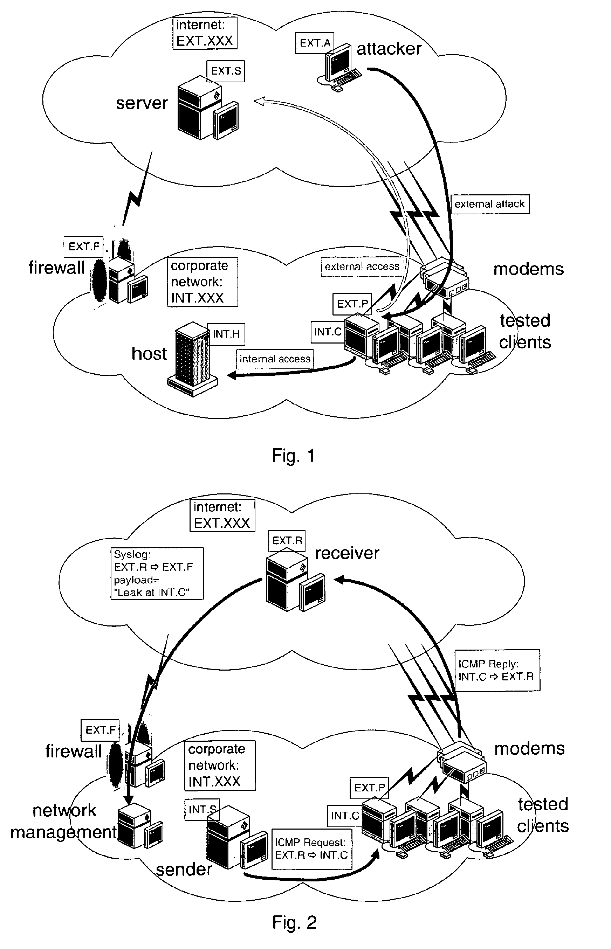

Fig. 1 visualizes this scenario. The corporate network with its clients and host computer is connected to the internet via a firewall (IP address EXT.F). This is the official connection between the company and the internet, authorized by the company. However, in case employees install their own modems in order to obtain a faster connection from their individual computer to the internet and the servers (EXT.S) there, the corporate network is suddenly vulnerable to external attacks (EXT.A). The external access from the corporate network to the internet no longer takes place solely over the firewalled connection but also via the private modem. An external attack may harm the corporate network via this route.

It is the object of the present invention to provide a method and system for detecting, locating and identifying leakages in a computer network. This object is achieved with the features of the claims.

The basic approach according to a first embodiment of the present invention uses the "ICMP echo request / reply" (ICMP = Internet Control Message Protocol) mechanism combined with a source IP address spoofing of the requesters source IP address in order to locate and identify leakages in a computer network. The spoofed source IP address is an official internet IP address, that is a part of the public address space of the internet. A receiver holds this official IP address and is placed on the internet. The traffic flow in detail according to the first embodiment of the present invention goes like this:
- A sender creates and transmits ICMP echo requests to all addresses in the corporate network in a cyclic manor, thus "sweeping" through all internal addresses.
- A receiver is sitting on the internet holding the spoofed address and listening for ICMP echo reply packets.
- The destination address of each ICMP echo request packet is a unicast IP address of the internal address space.
- The source address is not an address of the internal address space (i.e., the sender's address) but the official internet address of the listening receiver.
- If the client (i.e., the computer of the employee under surveillance) is not connected to the internet via an unauthorized connection, the client will send the ICMP echo reply to its default gateway. The default gateway does not have a route for the spoofed address (because the source address in the packet is the address of the external listening receiver) and thus discards the packet.
- If the client is connected to the internet via an unauthorized connection, i.e. a private modem, it will send the packet to the internet via this connection because the client's default gateway points to the internet. Hence, the receiver will get packages with the source address of the leaky client. By this source address, which is part of the internal network range of the corporate, the leak is detected, and the leaky client is located and subsequently identifiable.

According to a first aspect of the first embodiment of the present invention, a method of detecting, locating and identifying leakages in a computer network comprises the steps of: transmitting from a sender unit within said computer network a request signal to at least one client computer of said computer network, said request signal containing as source address the IP address of a receiver unit external to said computer network, said request signal initiating at the requested client computer an echo reply signal; monitoring at said external receiver unit incoming echo reply signals; and forwarding a monitoring result signal from the external receiver unit to a network management unit within said computer network, said monitoring result signal comprising the IP address of the requested client computer representing location and identification information of a client computer being leaky.

According to a second aspect of the first embodiment of the present invention, a sender unit for use in a method of detecting, locating and identifying leakages in a computer network is adapted to transmit a request signal to at least one client computer of said computer network, said request signal containing as source address the IP address of a receiver unit external to said computer network, said request signal initiating at the requested client computer an echo reply signal.

According to a third aspect of the first embodiment of the present invention, a receiver unit for use in a method of detecting, locating and identifying leakages in a computer network is adapted to monitor incoming echo reply signals from a tested/requested client computer of said computer network, and to forward a monitoring result signal to a network management unit of said computer network, said monitoring result signal comprising the IP address of the tested/requested client computer representing location and identification information of said client computer being leaky.

The approach according to the first embodiment works fine as long as the client is directly connected to the internet. But as for example DSL is widely implemented, some branch offices, for example, of a company use DSL against the corporate internal rules as an alternative to the corporate internet services to give internet access to all users on a subnet in that branch office. The default gateways of the clients are changed to the DSL router and the DSL router is configured with a route for the internal network INT.xxx that points to the old official default gateway. The first DNS entry is set to the internal corporate DNS, the secondary to the internet provider's DNS to look at both DNS trees, the internal and the external. By doing so, clients can access the internet directly while still connecting to all corporate resources in parallel.

When using the above described first embodiment of the invention for such a specific configuration, the external receiver unit still gets the ICMP echo reply packets from the clients, but the source address of the leaky client gets automatically replaced by the official address of the DSL router. Hence, the information of the client identity is lost. The only way to get to the leaky clients would be to force the provider to reveal the identity of the owner of that particular DSL contract. This is costly and moreover time consuming. A direct and immediate reaction cannot take place.

Hence, according to a second embodiment of the present invention, a sender unit within said computer network transmits a request signal to at least one client computer of said computer network, said request signal containing as source address the IP address of a receiver unit (monitoring unit) external to said computer network and as payload the IP address of the tested/requested client computer.

According to a first aspect of the second embodiment of the present invention, a method of detecting, locating and identifying leakages in a computer network comprises the steps of: transmitting from a sender unit within said computer network a request signal to at least one client computer of said computer network, said request signal containing as source address the IP address of a receiver unit external to said computer network and as payload the IP address of the requested client computer, said request signal initiating at the requested client an echo reply signal; monitoring at said external receiver unit incoming echo reply signals; and forwarding a monitoring result signal from the external receiver unit to a network management unit within said computer network, said monitoring result signal comprising the payload of the received echo reply signal, said payload representing location and identification information of a client computer being leaky.

According to a second aspect of the second embodiment of the present invention, the sender unit according to the second aspect of the first embodiment of the present invention is further adapted to transmit in the request signal as payload the IP address of the requested client computer.

According to a third aspect of the second embodiment of the present invention, a receiver unit for use in a method of detecting, locating and identifying leakages in a computer network according to the second aspect of the present invention is provided, said receiver unit being adapted to monitor incoming echo reply signals from said tested/requested client computer, and to forward a monitoring result signal to a network management unit of said computer network, said monitoring result signal comprising the payload of the received echo reply signal, said payload representing location and identification information of said client computer being leaky.

Hence, the present invention according to the second embodiment starts out from the basic idea of encapsulating the IP address of the tested client into the ICMP packet. This is preferably done by writing the clients IP address - and an optional digital signature to prove the authenticity - into the payload of the ICMP echo request packet.

The client has - according to IP standards - to encapsulate the request payload into its ICMP echo reply packet. Hence, the method according to the second embodiment of the present invention can be performed with all IP stacks that have implemented ICMP regardless of the operating system or hardware or purpose of the system. The receiver extracts the payload from the ICMP echo reply packet and send it to a management system, for example as a syslog message or a snmp trap (snmp = simple network management protocol). The optional digital signature can prove authenticity to the management system.

The present invention is not limited to the ICMP. Alternatively to ICMP, every connectionless protocol that returns the payload sent by the sender unchanged with the reply can be used, for example UDP (User Datagram Protocol). However, ICMP is preferred as it is implemented in all IP stacks by default.

The present invention is not limited to modems or DSL. The invention is applicable to other internet connections including but not limited to cable modems, leased line, ISDN, dial-up, i.e. in general to all internet connections from layer 1 up to layer 3 according to the OSI network layer model.

The advantage of the method according to the invention is that as a first stage it is determined that there is a leak (detection) and as a second stage it is determined where exactly the leak is (location). On the basis of this information, the network management unit, for example, performs the identification of the user of the leaky client computer.

The method according to the present invention is advantageous in that it detects illegal internet connections regardless of
- Operating system
- Installed software
- Management access to the client
- Purpose of the client
- Routing enabled or not
- Direct dialup or DSL router connection

According to the invention, this is achieved with standard protocols without using a software client or any other changes on the tested components. The components do not even have to be a computer. It could be a print server, a switch with a management IP Stack, a DSL-Router or an IP-phone as long as it has an IP stack.

Hence, the method according to the present invention is capable of detecting illegal internet connections if they are done in the most typical ways. By this, it closes one major gap in securing a corporate network.

As a reply to the identified leakage, the network management system, for example, extracts the name of the user of the leaky client from its management database and sends an email or a SMS to this client. In addition or alternatively, the network management system disconnects the port of the leaky client.

As a preferred feature, the network management unit instructs a sender unit in case a leaky client was detected to monitor this particular client with a higher priority.

According to a preferred embodiment of the present invention, the system comprises a plurality of sender units and a plurality of receiver units in order to have the ability to monitor an enormous number of clients as present in a computer network of larger companies.

The invention will now be described with reference to accompanying drawings in which:
- Fig. 1: shows the problem of network leakage of a corporate computer network connected to the internet;
- Fig. 2: shows a basic approach for detecting, locating and identifying network leakages according to a first embodiment of the present invention;
- Fig. 3: shows a problem associated with the first embodiment according to Fig. 2; and
- Fig. 4: shows the network leakage detection, location and identification according to a second embodiment of the present invention.

Fig. 2 shows the scenario according to the first embodiment of the present invention. The "sender" having the IP address INT.S in the corporate network sends out an ICMP echo request to client C having the IP address INT.C. However, the sender does not include its own IP address as the source address into the sent packet; rather, the address EXT.R of the external listening receiver is indicated as source address in the sent packet. If the client is connected to the internet via a private modem, the ICMP echo request will be answered by the client to the alleged requester, i.e. to receiver EXR.R. If such a packet arrives at the receiver, the receiver recognizes on the basis of the source address (i.e., INT.C) of this reply packet that there is a leak in the corporate network and informs the network management via firewall EXT.F with the information: Leak at INT.C. The existing network management can now react according to the configured rules and policies.

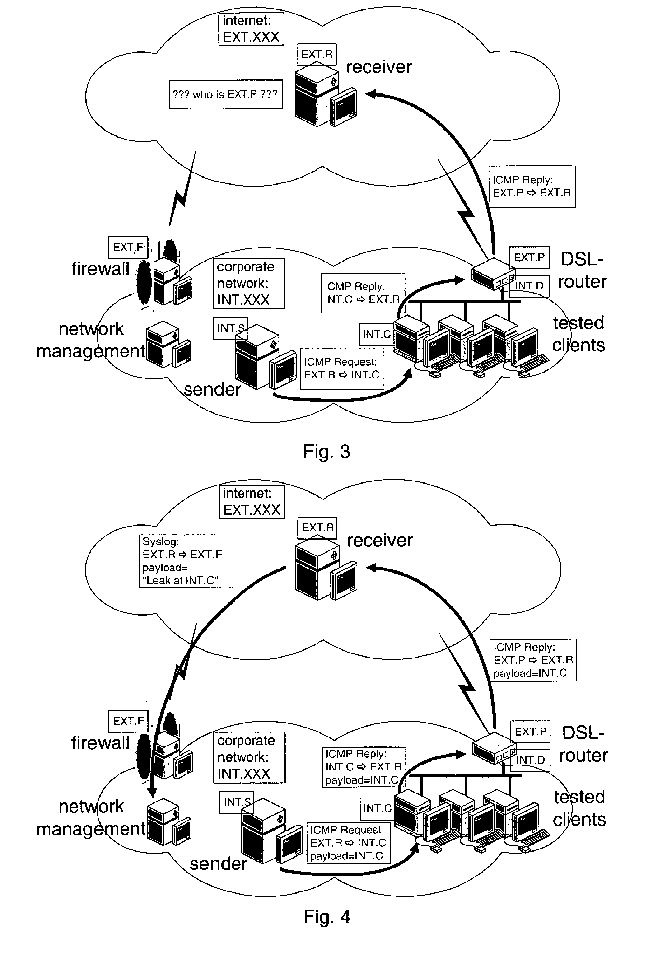

Fig. 3 demonstrates the case where the first embodiment is applied to DSL router solutions. Again, the sender having the internal IP address INT.S sends out an ICMP request to client C having the IP address INT.C. However, the sender does not include its own IP address as the source address into the sent packet; rather, the address EXT.R of the external listening receiver is indicated as source address in the sent packet. If the client is connected to the internet via a private modem, the ICMP request will be answered by the client to the alleged requester, i.e. to receiver EXR.R. However, since a DSL router is involved, the source address INT.C is replaced by the router address EXT.P. This process is known as "maskerading". The result is that the listening receiver gets an ICMP echo reply but the only information contained is that the leak is at the DSL router having the address EXT.P. This information is of no use to the network management because for a quick reaction the address of the client is required.

The second embodiment of the present invention providing a solution for such circumstances is shown in Fig. 4. It is shown in Fig. 4 that the sender (IP address INT.S) sends an ICMP request to a client C (IP address INT.C) using the IP address EXT.R of the external receiver (monitoring unit) as source address. However, according to the second embodiment, the address of the tested client is contained in the payload of the sent signal. Since the client is connected to the internet via a DSL router (INT.D; EXT.P), the automatic echo reply is sent to the received source address (EXT.R) using this connection. The DSL router replaces the address of the client by its own address EXT.P. Thus, the monitoring unit receives the echo signal with its source address EXT.P but still with the payload INT.C. This information is subsequently forwarded to the network management unit on the basis of this information ("leaky client = INT.C") the network management unit can react appropriately.

## Claims

1. Method of detecting, locating and identifying leakages in a computer network, comprising the steps of:
transmitting from a sender unit within said computer network a request signal to at least one client computer of said computer network, said request signal containing as source address the IP address of a receiver unit external to said computer network, said request signal initiating at the requested client an echo reply signal;
monitoring at said external receiver unit incoming echo reply signals; and
forwarding a monitoring result signal from the external receiver unit to a network management unit within said computer network, said monitoring result signal comprising the IP address of the requested client computer representing location and identification information of a client computer being leaky.

2. The method of claim 1,
said request signal further containing as payload the IP address of the requested client computer; and
said monitoring result signal comprising the payload of the received echo reply signal, said payload representing location and identification information of a client computer being leaky.

3. The method of claim 1 or 2, wherein the request signal is an ICMP echo request packet.

4. The method of claim 1 or 2, wherein the request signal is an UPD echo request packet.

5. The method of any of claims 1 to 4, wherein said request signal further contains a digital signature to prove authenticity.

6. The method of any of claims 2 to 5, further comprising the step of extracting at the receiver unit the payload from the echo reply packet.

7. The method of claim 6, further comprising the step of sending the extracted payload from the receiving unit to said network management unit, particularly as a syslog message or a snmp trap.

8. The method of any of claims 1 to 7, wherein said steps are repeated automatically at predetermined intervals.

9. Sender unit for use in a method of detecting, locating and identifying leakages in a computer network according to any of claims 1 to 8, said sender unit being adapted to transmit a request signal to at least one client computer of said computer network, said request signal containing as source address the IP address of a receiver unit external to said computer network, said request signal initiating at the requested client computer an echo reply signal.

10. Sender unit according to claim 13, being further adapted to include as payload the IP address of the requested client computer into said request signal.

11. Sender unit according to claim 13, being further adapted to include a digital signature into said request signal.

12. Receiver unit for use in a method of detecting, locating and identifying leakages in a computer network according to any of claims 1 to 8, said receiver unit being adapted to monitor incoming echo reply signals from a requested client computer of said computer network, and to forward a monitoring result signal to a network management unit of said computer network, said monitoring result signal comprising the IP address of the requested client computer representing location and identification information of said client computer being leaky.

13. Receiver unit according to claim 12, said receiver unit being further adapted to forward a monitoring result signal to a network management unit, said monitoring result signal comprising the payload of the received echo reply signal, said payload representing location and identification information of said client computer being leaky.

14. The receiver unit of claim 13, said receiver unit being further adapted to extract the payload from the echo reply packet.

15. The receiver unit of claim 14, said receiver unit being further adapted to send the extracted payload to said network management unit, particularly as a syslog message or a snmp trap.

16. System of detecting, locating and identifying leakages in a computer network, comprising
at least one sender unit according to claim 9, 10, or 11; and
at least one receiver unit according to any of claims 12 to 15.
